# EUROPEAN PATENT APPLICATION

(11) **EP 3 554 052 A1**
(43) Date of publication of application: **16.10.2019**
(21) Application number: 19161872.7
(22) Date of filing: 11.03.2019
(51) Int. Cl.: H04L 29/08, H04L 29/06, H04W 12/06

(54) **MACHINE SENSOR NETWORK MANAGEMENT**

(30) Priority: 10.04.2018 GB 201805898
(71) Applicant: Rolls-Royce plc, London SW1E 6AT (GB)
(72) Inventor: Holtby, Daniel, Derby, Derbyshire DE24 8BJ (GB); Mills, Andrew, Derby, Derbyshire DE24 8BJ (GB)
(74) Representative: Rolls-Royce plc

(57) **Abstract**

There are disclosed corresponding methods, systems, controllers (26) and software for machine (10) sensor network management. Upon receiving from a node a request to join an existing network of machine sensors (25), sound waves are emitted in the vicinity of the machine (10). The emitted sound waves are sensed by the node and a corresponding signal output is generated by the node. The signal output from the node is compared with the emitted sound waves and/or a further signal output from one or more machine sensor (25) in the existing network. The node request to join the existing network is authenticated or rejected based on the comparison.

## Description

### BACKGROUND OF THE DISCLOSURE

The present disclosure concerns machine sensor networks.

A machine sensor network is a network of sensors located on or in a machine, which monitor specific parameters relating to the operation and/or state of the machine. The sensors may be a combination of sensors, including for example acoustic sensors, vibration sensors and optical sensors.

More specifically, for machines comprising engines, sensor networks may be used to monitor the operational health of the engine. Monitoring the health of the machine/engine allows a number of advantages such as a reduction of operational disruption due to being able to predict early onset of potential failure modes and thereby schedule preventative maintenance or overhaul work. Other benefits include reduced design conservatism and optimisation of through-life use. As such, the field of equipment health monitoring (EHM) has grown significantly over recent years, particularly for complex/costly machines. An example of a machine for which EHM is particularly relevant is a gas turbine engine.

Acoustic sensing in particular is known to be highly versatile for EHM applications, offering wide coverage and low technical risk. The acoustic signature of an engine is unique to the health state and operating condition of the engine, and it is therefore desirable to monitor the acoustic signature of the engine to enable the aforementioned advantages.

Machine sensor networks may contain confidential information regarding the machine and/or operation of the machine on which the machine sensor network is located. It is therefore desirable to provide machine sensor networks with suitable authentication/security systems to prevent unauthorised access to the machine sensor network, thus preventing unauthorised users from gaining access to such confidential information and/or providing false, and potentially damaging, information over the network.

Conventional machine sensor network authentication systems use an encryption key to prevent unauthorised users from obtaining access to the system. In these conventional systems, the correct key must be exchanged between the node and the machine sensor network before the node is granted access to the machine sensor network. The key may take the form of an encryption key, such as a pairing code, text string or the like.

However, secure distribution of the encryption key around the network is problematic, and pairing key/code may be cracked, predicted or maliciously distributed/lost. Encryption methods alone may not be sufficient to defend the machine sensor network from potential threats.

Moreover, input of a code to overcome the encryption authentication system requires a user interface and user training, adding to system costs and complexity.

The hard wiring of complex sensor networks for aircraft engines (i.e. using a so-called sensor harness) is costly and time consuming. There is a trend towards use of wireless sensor networks since due to their ease of installation and potential for a reduction in weight. Wireless data transmission is however inherently less secure than more-conventional wired sensor networks since they may be accessible from a location that is not physically on/in the machine.

There is proposed a method and/or system for machine sensor network authentication that overcomes or mitigates one or more of these problems.

### BRIEF SUMMARY OF THE DISCLOSURE

According to a first aspect there is provided a method of machine sensor network management, the method comprising: receiving from a node a request to join an existing network of machine sensors; emitting sound waves in the vicinity of the machine; sensing of the emitted sound waves by the node and generating a signal output from the node corresponding thereto; comparing the signal output from the node with the emitted sound waves and/or a further signal output from one or more machine sensor in the existing network; and authenticating the node request to join the existing network in response to said comparison.

The comparison may be performed with reference to an acoustic output determined form an installation phase for the machine and/or sensor network.

The emitted sound waves may also be sensed by the one or more machine sensor in the existing network and said one or more machine sensor may generate the further signal output corresponding to the sensed sound waves.

The method may comprise calculating a distortion parameter or function based on a difference between any combination of the emitted sound waves, the signal output and the further signal output; and applying said parameter or function during said comparison. The signal output or further signal output may be processed based upon the distortion parameter or function.

A method of machine sensor authentication, installation and/or calibration may be provided.

According to a further aspect, there is provided a machine sensor network system comprising a central controller for administering network management for a network of sensors on a machine, the central controller configured to: receive from a node a request to join an existing network of machine sensors; control emission of sound waves from the machine; cause sensing of the emitted sound waves by both the node and one or more machine sensor in the existing network; receive from the node and one or more machine sensor in the existing network a signal indicative of the sensed sound waves; compare the received signals; and either authenticate or reject the node request to join the existing network of machine sensors in response to said comparison.

According to a further aspect there is provided a controller for administering machine sensor network management, the controller configured to: receive from a node a request to join an existing network of machine sensors; control emission of sound waves from a machine; cause sensing of the emitted sound waves by the node; receive from the node and one or more machine sensor in the existing network a signal indicative of the sensed sound waves; compare the received signals; and either authenticate or reject the node request to join the existing network of machine sensors in response to said comparison.

According to another aspect there is provided a data carrier comprising machine readable instructions for operation of a controller in a machine sensor network system to: receive from a node a request to join an existing network of machine sensors; control emission of sound waves from a machine; receive from the node a signal output corresponding to the sensed sound waves; compare the received signal output from the node with the emitted sound waves and/or a further signal output from one or more machine sensor in the existing network; and either authenticate or reject the node request to join the existing network of machine sensors in response to said comparison.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION OF THR DRAWINGS

Embodiments will now be described by way of example only, with reference to the Figures, in which:
**Figure 1** is a sectional side view of a gas turbine engine;
**Figure 2** is a flowchart of a method of machine sensor network installation and calibration;
**Figure 3** is a flowchart of a method of machine sensor network authentication.

### DETAILED DESCRIPTION

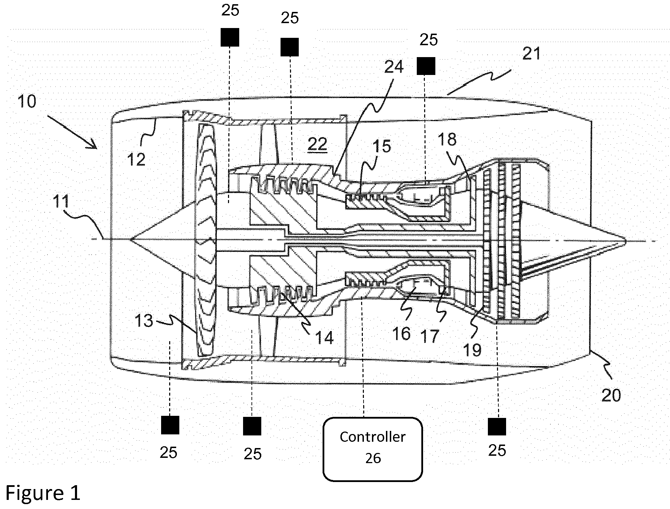

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

The engine 10 further comprises machine sensors 25 which form a machine sensor network, and a controller 26. The controller 26 is arranged to administer the sensor network and/or receive the sensor signals for processing. The sensors in the network could also drive, or comprise, actuators.

The machine sensors 25 are configured to sense any of, or any combination of, temperature, pressure, vibration, fluid flow, sound, electrical properties (voltage, current, etc.), chemistry (NOX, CO2, fluid composition), electromagnetic radiation. The machine sensors 25 could comprise any of, or any combination of, thermocouples, pyrometers, strain gauges, Fiber Bragg Grating (FBG), piezo and mems accelerometers, various microphone types, amongst other conventional sensors. Any of the sensors may be configured to operate in a wireless sensor network.

The controller 26 is configured to control the machine sensor network. The controller may comprise a network gateway. The controller may comprise a hardwired node, e.g. a trusted node in the network. The controller may, for example, comprise an engine monitoring unit (EMU) and/or an electronic engine controller (EEC). Where the controller 26 is not an EEC, the engine 10 may additionally comprise an EEC.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

Specific examples of the present disclosure are described in relation to gas turbine engines of the type described above in relation to Figure 1. However, the present disclosure may be applied to other complex machines for which sensor networks are employed, such as other types of engines and propulsion/transport systems, power generation, pumping and/or earth-moving equipment amongst other industrial machinery, such as manufacturing equipment, chemical processing equipment or the like.

In the context of gas turbine engines, and other similar complex machines, there are a number of subsystems (line replaceable units) that support main engine operation. Each line replaceable unit locale has its own unique sound environment within the engine based on its proximity to other machine components or subsystems.

The disclosure concerns the manner in which a request to join the existing network 25, 26 by a new sensor 27 is handled and/or the manner in which sensors in the network can be installed/calibrated.

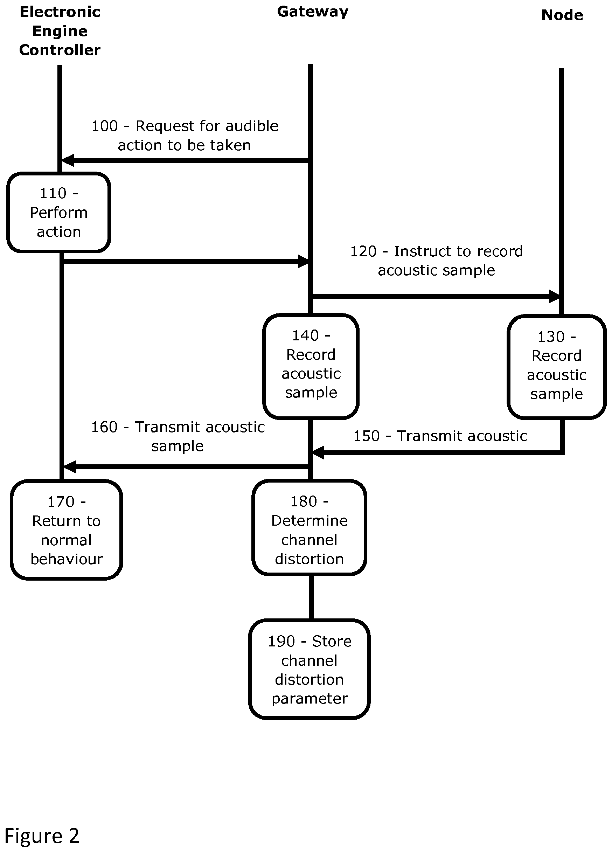

With reference to Figure 2, a method of machine sensor network installation and/or calibration is described. At step 100, the installation and/or calibration process is initiated and the network gateway requests that the controller 26 performs/initiates an audible action (e.g. instructs or controls output of an audible/sound signal). The request is submitted wirelessly, for example via Bluetooth (RTM) or other suitable, typically short-range, radio communication protocol.

The acoustic signal could be a dedicated acoustic output by a specific signal generator on the engine. A series of tones could be output/played by the gateway/signal generator. Additionally or alternatively the acoustic output of the engine itself, when operational, would be sufficient as the acoustic signal to be detected. The actual nature of the sound is not in itself critical. Rather it is the distortion between different measures of the sound, and the predictability thereof, that is used.

It would be possible to adjust the acoustic output of the engine (or to use an acoustic sample at a specific point in the engine cycle, e.g. for which the acoustic output is known) for the purpose of outputting an acoustic signal. For example, if it is known that the engine is rotating at a specific frequency, a legitimate, faultless node should be able detect a strong component that corresponds to this.

At step 110, an acoustic signal(s) is emitted, e.g. being effected by the controller or else known to be emitted by the engine.

At step 120, the network gateway instructs an installed sensor/node to take a recording of the acoustic signal(s). The installed node is, or comprises, an acoustic sensor.

Step 120 may occur in response to detecting that the controller has controlled output of an acoustic signal, or may occur after requesting that the controller performs an audible action, e.g. at a predetermined time there-after.

At step 130, the installed node records the acoustic signal(s). At step 140, the network gateway also records the acoustic signal(s).

Step 130 and step 140 are conducted simultaneously, e.g. for a corresponding or overlapping period of time, so that the requesting node and the existing machine sensor record the audible action over the same time frame. At step 150, the installed node transmits the recording of the acoustic signal(s) to the network gateway.

At step 160, the network gateway transmits a sample of the recording taken at step 140 to the controller, indicating that the network gateway and the installed node have recorded acoustic samples and the controller can therefore stop performing the audible action. At step 170, in response to receiving the sample of the recording taken at step 140, the controller may stop performing the audible action commenced at step 110, e.g. if active acoustic signal emission is used, and returns to normal behaviour.

As an alternative to steps 160 and 170, the network gateway may transmit a stop signal to the controller, the stop signal comprising instructions to stop performing the audible action, and the controller stopping performing the audible action and returning to normal behaviour in response to receiving the stop signal.

At step 180, the network gateway compares the acoustic signal(s) recorded at the network gateway with the acoustic signal(s) recorded by the installed node and determines any differences in the signals. As it is known that the installed node and the network gateway are recording the same audible action, and the recorded acoustic signals should therefore be the same. A comparison between the recorded acoustic signals is performed for the common time frame and any differences between the two signals are logged.

Any differences between the acoustic signals are attributed to the acoustic propagation channel that transmits the recorded acoustic signal(s) from the installed node to the network gateway. The propagation channel may change with environmental conditions - e.g. air density due to altitude/temperature differences. Such changes may be compensated for, e.g. using measures from other sensors (wireless or wired)

At step 190, the differences in the acoustic signals attributed to the acoustic propagation channel are stored at the network gateway as a channel distortion parameter, the channel distortion parameter being applicable to the acoustic signal(s) recorded at the installed node location to correct the acoustic signal(s) recorded at the installed node to be the same as the acoustic signal(s) recorded at the network gateway. The channel distortion parameter(s) may relate to any the amplitude difference and/or phase difference between the received signals.

This method may be repeated for each installed node to determine the relevant channel distortion parameter to be applied to acoustic signals received from nodes at various locations, via various acoustic propagation channels. Each channel distortion parameter is stored at the network gateway for future use in machine sensor network authentication.

The method of machine sensor network installation and/or calibration described in relation to Figure 2 is an automated method that requires no input from a human user.

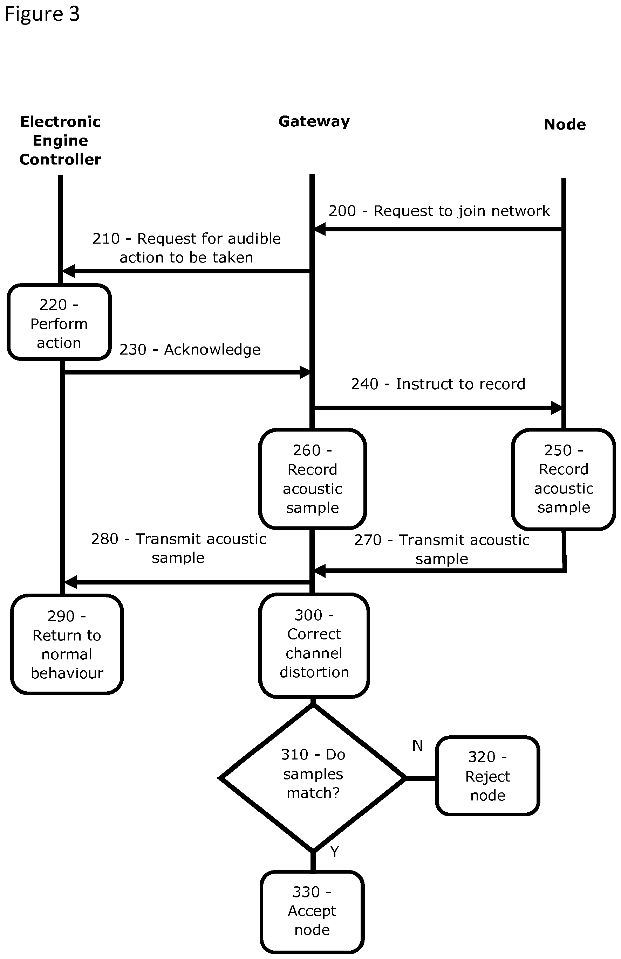

With reference to Figure 3, a method of sensor authentication for a machine sensor network is described. At step 200, a new sensor/node 27 requests to join the existing machine sensor network by transmitting a request signal to the network gateway, which identifies the new sensor/node 27 to the network gateway. The request signal is transmitted wirelessly, for example via Bluetooth (RTM) or other suitable wireless communication protocol. Steps 210, 220, 230 and 280 may be optional. At step 210, in response to receiving the request signal, the network gateway may requests that the controller performs an audible action, e.g. if active acoustic signal emission is used. This may be instantaneous, or after a predetermined period of time or once one or more particular operating condition is met. At step 220, the controller may perform an audible action in a manner as previously described herein.

At step 230, the network gateway may acknowledge that the controller is performing an audible action. At step 240, e.g. in response to acknowledging that the controller is performing an audible action, the network gateway instructs the node to record its surrounding acoustics. As an alternative to steps 230 and 240, the network may instruct the node 27 to record its surrounding acoustics at a predetermined time after requesting that the controller performs an audible action.

At step 250, the node 27 records its surrounding acoustics. The node must therefore be, or comprise, an acoustic sensor in order to continue the authentication process.

At step 260, the network gateway instructs a machine sensor 25 within the existing machine sensor network, and/or the gateway to record its surrounding acoustics. The machine sensor 25 is, or comprises, an acoustic sensor. Step 250 and step 260 are conducted simultaneously, so that the requesting node 27 and the existing machine sensor 25 or gateway record the audible action over the same time frame.

At step 270, the node 27 transmits a sample of the recording taken at step 250 to the network gateway. At step 280, the network gateway may transmit a sample of the recording taken by the gateway and/or machine sensor at step 260 to the controller 26, indicating that the node 27 and the machine sensor/gateway have recorded acoustic samples and the controller 26 can therefore stop performing the audible action and return to normal behaviour. At step 290, in response to receiving the sample of the recording taken at step 260, the controller 26 may stop performing the audible action commenced at step 220 and returns to normal behaviour. As an alternative to steps 280 and 290, the network gateway may transmit a stop signal to the controller, the stop signal comprising instructions to stop performing the audible action.

At step 300, the network gateway applies a function to the acoustic sample(s) recorded by the node 27 at step 250, the function correcting the acoustic sample(s) to account for any channel distortion accumulated during recording and/or transmission of the acoustic sample(s). The function applied at step 300 may be one or more channel distortion parameter determined in the method of installation and/or calibration illustrated in Figure 2. Any, any combination, or all of those channel distortion parameters could be used, e.g. to compare the acoustic signal recorded by the new sensor 27 to any existing sensor in the network.

In one example, all existing sensors in the network may record the acoustic signal and the closest recorded signal to the signal recorded by the new node 27 may be selected for the comparison (e.g. including its channel distortion function/parameter).

At step 310, the network gateway compares the corrected acoustic sample(s) produced at step 300 and the acoustic sample(s) recorded at step 260 to see if they match. A degree of mismatch may be permitted during the comparison, e.g. based on one or more simple percentage difference threshold or based on the difference between the recorded signals or channel distortion parameters for existing sensors in the network. Additionally or alternatively a mismatch parameter could compensate for environmental channel effects.

According to various examples of the disclosure, the comparison may use prior knowledge or recordings from an installation phase to make the comparison.

If the acoustic samples are not found to match (e.g. within the determined tolerances), at step 320 the node is rejected from joining the existing machine sensor network. If the acoustic samples are found to match, at step 330 the node is authenticated and is accepted to join the existing machine sensor network.

In other examples, the recorded signal from the new node 27 could be compared to an acceptable signal profile, e.g. including tolerances based upon the previously determined channel distortion parameters or a corresponding function. For example a band or zone for an acceptable signal may be defined and the acceptance or rejection of the new sensor can be determined based on whether the recorded signal from the new node 27 fits within said band/zone. Thus the recording by the new sensor may be compared to either current or historic acoustic signal recordings from within the network, e.g. including any relevant tolerances or distortion function.

If at step 310 the acoustic samples are found to match or meet the signal acceptance criteria, and at step 330 the node 27 is authenticated and accepted to join the existing machine sensor network, the node 27 may be assigned a unique network address for ongoing communication within the network. The unique network address allows the machine sensor network and/or the controller to write to the newly accepted node, and allows the machine sensor network and/or the controller to read from the newly accepted node. The node may act as a relay within the network, e.g. to relay data over a multi-hop topology (for direct node-to-node communications). In examples where the node comprises an actuator, the joining of the node to the network may allow the node to use its local actuation.

Once, at step 330, the node has been authenticated and accepted to join the existing machine sensor network, the newly accepted node may undergo the installation and/or calibration process described in relation to Figure 2. The new sensor node may perform its conventional sensing function and communicate sensed signals through the existing machine sensor network.

The method of machine sensor network authentication described in relation to Figure 3 is an automated method that requires no input from a human user.

The method described herein may be used in combination with other conventional network authorisation techniques, e.g. so as to a provide two-or-more factor authorisation process.

The methods described herein may be advantageous in that authorisation requires close proximity to the working components of the machine being monitored, which would typically be inaccessible to unauthorised personnel. The degree of tolerance or match required in the recorded acoustic signals for acceptance of a request to join the network may be adjusted depending on the level of security required. For example, in the case of a gas turbine engine the level of tolerance can be adjusted to only permit a sensor request for a sensor located within the outer nacelles structure of the engine, i.e. thereby rejecting any sensors that are simply located near, but not within the engine structure. Similar tolerances could be defined for other types of machine having a machine housing/casing structure.

Methods/systems according to the disclosure could work as an additional 'layer of defence' and work over an encrypted channel.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A method of machine sensor network management, the method comprising:
receiving from a node (27) a request to join an existing network (25,26) of machine sensors;
emitting sound waves in the vicinity of the machine;
sensing of the emitted sound waves by the node (27) and generating a signal output from the node (27) corresponding thereto;
comparing the signal output from the node (27) with the emitted sound waves and/or a further signal output from one or more machine sensor in the existing network; and
authenticating the node (27) request to join the existing network in response to said comparison.

2. A method of machine sensor network management according to claim 1, wherein the emitted sound waves are also sensed by the one or more machine sensor in the existing network and said one or more machine sensor generates the further signal output corresponding to the sensed sound waves.

3. A method of machine sensor network management according to claim 2, the method further comprising:
calculating a distortion parameter or function based on a difference between any combination of the emitted sound waves, the signal output and the further signal output; and
applying said parameter or function during said comparison.

4. A method of machine sensor network management according to claim 3, wherein the distortion parameter comprises a function relating to the amplitude difference and/or frequency difference and/or phase difference between the signals.

5. A method of machine sensor network management according to claim 3 or 4, wherein the method further comprises processing the signal output or further signal output based upon the distortion parameter or function.

6. A method of machine sensor network management according to any preceding claim, wherein the method of machine sensor network management is a method of machine sensor authentication, installation and/or calibration.

7. A method of machine sensor network management according to claim 6, the method further comprising calibrating the node (27) and/or the machine sensor based upon said comparison.

8. A method of machine sensor network management according to any preceding claim, wherein the comparison comprises setting one or more threshold value of difference between the signal output from the node (27) the further signal output and authenticating the request if the difference between said signal outputs is within said threshold.

9. A method of machine sensor network management according to any preceding claim, wherein emitting sound waves from the machine comprises causing the machine to emit sound waves in response to receiving from the node (27) the request to join the existing network of machine sensors.

10. A method of machine sensor network management according to claim 9, wherein if the machine is currently emitting sound waves when the request to join the existing network of machine sensors is received from the node (27), emitting sound waves from the machine comprises adjusting the sound waves currently being emitted from the machine in response to receiving from the node (27) the request to join the existing network of machine sensors.

11. A method of machine sensor network management according to any preceding claim, wherein the node (27) and/or the one or more machine sensor in the existing network comprises an acoustic sensor.

12. A method of machine sensor network management according to any preceding claim, wherein the request to join the network and/or the receiving of signals is transmitted wirelessly.

13. A method of machine sensor network management according to any preceding claim, wherein the method is automated.

14. A machine sensor network system comprising a central controller for administering network management for a network of sensors on a machine, the central controller configured to:
receive from a node (27) a request to join an existing network of machine sensors;
control emission of sound waves from the machine;
cause sensing of the emitted sound waves by both the node (27) and one or more machine sensor in the existing network;
receive from the node (27) and one or more machine sensor in the existing network a signal indicative of the sensed sound waves;
compare the received signals; and
either authenticate or reject the node (27) request to join the existing network of machine sensors in response to said comparison.

15. A controller for administering machine sensor network management, the controller configured to:
receive from a node (27) a request to join an existing network of machine sensors;
control emission of sound waves from a machine;
cause sensing of the emitted sound waves by the node (27);
receive from the node (27) and one or more machine sensor in the existing network a signal indicative of the sensed sound waves;
compare the received signals; and
either authenticate or reject the node (27) request to join the existing network of machine sensors in response to said comparison.

16. A data carrier comprising machine readable instructions for operation of a controller in a machine sensor network system to:
receive from a node (27) a request to join an existing network of machine sensors;
control emission of sound waves from a machine;
receive from the node (27) a signal output corresponding to the sensed sound waves;
compare the received signal output from the node (27) with the emitted sound waves and/or a further signal output from one or more machine sensor in the existing network; and
either authenticate or reject the node (27) request to join the existing network of machine sensors in response to said comparison.
